# EUROPÄISCHE PATENTSCHRIFT

(11) **EP 0 843 609 B1**
(45) Veröffentlichungstag und Bekanntmachung des Hinweises auf die Patenterteilung: **29.09.1999**
(21) Anmeldenummer: 96929217.6
(22) Anmeldetag: 07.08.1996
(51) Int. Cl.: B23Q 1/00, B23Q 11/10

(54) **Bohrwerkzeug, insbesondere Bohrer**
Boring tool, in particular drill
Outil de perçage, particulièrement foret

(30) Priorität: 08.08.1995 DE 29512745 U; 21.02.1996 DE 29602997 U
(43) Veröffentlichungstag der Anmeldung: 27.05.1998
(60) Teilanmeldung: 98115795.1
(73) Patentinhaber: KENNAMETAL INC., Latrobe, PA 15650-0231 (US)
(72) Erfinder: KAMMERMEIER, Dirk, D-90547 Stein (DE); BORSCHERT, Bernhard, D-90408 Nürnberg (DE)
(74) Vertreter: Tergau, Enno, Dipl.-Ing.
(86) Internationale Anmeldenummer: EP9603489
(87) Internationale Veröffentlichungsnummer: WO9705987

(56) Entgegenhaltungen:
- DE-C- 29 794
- DE-C- 133 433
- DE-C- 4 327 232
- US-A- 2 847 880
- PATENT ABSTRACTS OF JAPAN vol. 7, no. 203 (M-241) [1348] , 8.September 1983 & JP,A,58 102613 (INA SEITOU K.K.), 18.Juni 1983,

## Beschreibung

Bei der zerspanenden Bearbeitung von insbesondere metallischen Werkstücken tritt das Problem auf, daß das Bohrwerkzeug, etwa ein Bohrer oder eine Reibahle (im folgenden wird auf Bohrer Bezug genommen) sich zusammen mit dem Werkstückstoff erhitzt. Insbesondere in der automatischen Serienfertigung ist deshalb eine Kühlschmierung mit einem Kühlschmierstoff (im folgenden Schmierstoff genannt) erforderlich. Bei der sog. Naßbearbeitung wird ein hoher Schmierstoffüberschuß in flüssiger Form in das Bohrloch hineingeleitet. Diese Art der Kühlschmierung ist jedoch mit relativ hohen Anlagekosten und Kosten für die Schmierstoffentsorgung, Reinigung etc. behaftet. Beim Bohren ist es außerdem nicht ohne weiteres möglich, den Schmierstoff in das Bohrerloch hinein zu fördern. Es werden deshalb Schmiersysteme verwendet, bei dem der Schmierstoff mit Hilfe von Fördereinrichtungen über die Spindel einer Bearbeitungsmaschine und wenigstens einem im Bohrer vorhandenen Schmierstoffkanal den jeweiligen Wirkstellen, etwa im Bereich der Bohrerhauptschneiden oder der Spanfläche, zugeführt wird. Bei diesen Schmiersystemen ist aber schon allein deshalb eine relativ große Schmierstoffmenge erforderlich, weil die Versorgungsleitungen, die von der Versorgungseinrichtung zur Bearbeitungsmaschine bzw. zu deren Spindel führen mit Schmierstoff gefüllt werden müssen. Außerdem läßt sich mit herkömmlichen Versorgungseinrichtungen eine genaue Dosierung von geringen Schmierstoffmengen nur schwierig durchführen. Aus JP-A-58-102613 ist ein Bohrwerkzeug mit einem hohlzylindrischen Bohrkopf beschrieben. Der Bohrkopf geht einerseits in einen Schaft über, mit dem das Bohrwerkzeug an einer Maschine festspannbar ist. Im Bohrkopf ist ein im wesentlichen topfförmiger Spendebehälter eingesetzt und über eine Verschraubung fixiert. Nachteilig bei dem bekannten Bohrwerkzeug ist, daß der Spendebehälter in dessen Wirkbereich, also im Bereich der Schneidkanten des Bohrkopfes angeordnet und dadurch hohen thermischen und mechanischen Belastungen ausgesetzt ist. Dementsprechend muß der Spendebehälter sehr widerstandsfähig gestaltet sein. Außerdem muß er mit aufwendigen und stabilen Befestigungsmitteln am Bohrwerkzeug befestigt sein. Nachteilig ist weiterhin, daß der Spendebehälter jeweils der Formgebung des Wirkbereiches des Bohrwerkzeuges angepaßt sein muß. Dies macht dessen Herstellung aufwendig und damit teuer. In AT 29794 ist ein Bohrwerkzeug beschrieben, an dessen schaftseitiger Stirnseite ein Spendebehälter angeordnet ist. Dieser Spendebehälter überragt aber den Schaftumfang erheblich, was das Einspannen in einer Werkzeugaufnahme unmöglich macht oder doch zumindest sehr erschwert.

Aufgabe der Erfindung ist es, ein Bohrwerkzeug vorzuschlagen, das problemlos in einer Werkzeugaufnahme einspannbar und mit dem auf technisch einfache Weise eine Mindermengenschmierung mit exakter Dosierung durchführbar ist.

Diese Aufgabe wird durch ein Bohrwerkzeug nach Anspruch 1 und durch ein Bohrwerkzeug nach Anspruch 5 gelöst.

Ein erfindungsgemäßes Bohrwerkzeug weist einen Schaft und ein Schneidteil und wenigstens einen internen Schmierstoffkanal auf. Innerhalb des Bohrerschaftes ist ein Spendebehälter angeordnet, mit dem wenigstens einen, der im Wirkbereich des Schneidteils nach außen mündenden Schmierstoffkanal fluidisch verbunden ist. Auf diese Weise wird ein Bohrwerkzeug mit integriertem Schmiersystem geschaffen. Es kann, wie oben bereits ausgeführt, unabhängig von einer an einer Bearbeitungs- oder Werkzeugmaschine vorhandenen Schmierstoff-Versorungseinrichtung eingesetzt werden. Dadurch, daß jeder Bohrer sein eigenes Schmierstoffdepot quasi mit sich trägt, ist es möglich, unterschiedliche Bohrertypen mit individuellen den jeweiligen Bohrverhältnissen angepaßten Schmierstoffen zu versorgen. Bei herkömmlichen Schmierstoff-Versorungssystemen ist dies nicht ohne größeren technischen Aufwand möglich. Ebenso ist die Reinigung oder ein Wechsel des Schmierstoffes mit einem relativ hohen technischen und zeitlichen Aufwand verbunden.

Ein erfindungsgemäßer Spendebehälter kann in vorteilhafter Weise als eine sacklochförmige Ausnehmung im Schaft des Bohrwerkzeugs vorgesehen werden, wobei sich die Ausnehmung von der schaftseitigen Stirnfläche in Richtung des Schneidteils des Bohrwerkzeugs erstreckt. Besonders vorteilhaft ist es, wenn der Spendebehälter als Wechselpatrone ausgebildet ist, die in einer Aufnahme-Ausnehmung im Schaft des Bohrwerkzeugs einliegt. Es kann dann auf ganz einfache Weise, etwa bei hochwertigen Bohrwerkzeugen mit langen Standzeiten, ein aufgebrauchter Schmierstoffvorrat aufgefüllt werden. Auf diese Weise ist es auch möglich, den Spendebehälter klein bzw. die im Bohrwerkzeug bevorratete Schmierstoffmenge gering zu halten. Um den Auswechselvorgang möglichst einfach zu gestalten ist es vorteilhaft, wenn die Wechselpatrone ein Kugelsperrventil mit einer in Schließrichtung federbeaufschlagten Schließkugel aufweist. Das Kugel-Sperrventil wird in an sich bekannter Weise durch einen Betätigungstößel in seine Öffnungsstellung bewegt, wenn die Wechselpatrone in die Aufnahme-Ausaufnehmung eingesetzt wird bzw. darin einliegt. Zweckmäßigerweise ist der Betätigungsstößel am Boden der Aufnahme-Ausnehmung und das Kugel-Sperrventil stirnseitig an der Wechselpatrone angeordnet.

Ein auswechselbarer Spendebehälter kann auch in Form eines separaten, mit der schaftseitigen Stirnseite des Bohrwerkzeugs lösbar verbundenen Aufsetzbehälters ausgestaltet sein. Ein solcher Behalter kann fluidisch mit einem Schmierstoffkanal des Bohrers verbunden werden, in dem ein auf der schaftseitigen Stirnfläche des Bohrers vorhandener Anschlußstutzen über eine Öffnung im Aufsetzbehälter in dessen Innenraum hineinragt. Der Anschlußstutzen ist dabei von einem mit dem Schmierstoffkanal fluidisch verbundenen Verbindungskanal durchsetzt.

Zur Unterstützung der Schmierstofförderung ist es vorteilhaft, wenn der Spendebehälter druckbeaufschlagt ist. Eine solche Druckbeaufschlagung kann in vorteilhafter Weise etwa durch ein expandierbares Gaspolster realisiert werden. Ein solches Gaspolster kann entweder von vornherein im Spendebehälter vorhanden sein oder erst bei Bedarf erzeugt werden. Dazu ist beispielsweise der Behälter durch einen Trennkolben in einen Schmierstoffraum und in einen Gaserzeugungsraum getrennt. Im Gaserzeugungsraum befindet sich eine Elektrolytflüssigkeit, in die bei Bedarf ein Feststoff eingebracht werden kann, der mit der Elektrolytflüssigkeit unter Gasentwicklung reagiert.

Eine Druckbeaufschlagung kann aber auch in vorteilhafterweise in Form eines federbelasteten Druckkolbens realisiert werden. Sowohl bei der Druckbeaufschlagung des Spendebehälters sowie bei Verwendung von kapillaren Speichermedien ist eine lageunabhängige Verwendung des Bohrwerkzeugs möglich. Der Spendebehälter ist in allen bisher genannten Ausführungsbeispielen vorzugsweise wiederbefüllbar. Um eine Wiederbefüllbarkeit zu gewährleisten, ist der Spendebehälter vorzugsweise mit einem von außen entriegelbaren Rückschlagventil versehen, das beispielsweise als federbelastetes Kugel-Sperrventil ausgebildet ist. Ein solches Ventil kann ganz einfach z.B. durch den Abgabestutzen eines Schmierstoff-Behälters entriegelt und der Spendebehälter mit Schmierstoff aufgefüllt werden.

In einem erfindungsgemäßen Bohwerkzeug ist der Schmierstoffkanal vorzugsweise als ein zentraler koaxial zur Mittellängsachse des Bohrers verlaufender Kanal ausgeführt, der sich zumindest im Bereich von Austrittsöffnungen zur Spitze des Bohrwerkzeugs hin verjüngt. Durch diese Form des Schmierstoffkanals wird das Nachfließen, insbesondere eines Schmierstoffes größerer Viskosität erleichtert. Je näher sich im Einsatzfall ein Schmierstoff an der Wirkstelle befindet, desto dünnflüssiger wird er. Dementsprechend ist der Querschnitt des Schmierstoffkanals mit zunehmender Nähe zur Wirkstelle verringert. Ein vergleichbarer Effekt wird durch eine Stufenbohrung erreicht, wobei der Abschnitt mit dem kleineren Durchmesser im spitzennahen stärker erwärmten Bereich des Bohrwerkzeugs angeordnet ist. Eine solche Ausgestaltung ist aber nicht zwingend für ein erfindungsgemäßes Bohrwerkzeug. So können auch mehrere gedrallte Schmierstoffkanäle vorhanden sein, die etwa einen dem Spannutverlauf entsprechenden Verlauf aufweisen.

Der Vorteil der erfindungsgemäßen Bohrwerkzeuge liegt zum einen darin, daß technisch aufwendige Versorgungseinrichtungen, etwa aufwendig abzudichtende Drehdurchführungen oder regelbare Pumpenaggregate entfallen. Der Spendebehälter ist direkt mit dem Bohrwerkzeug verbunden und dreht sich mit diesem bei einer zerspanenden Bearbeitung eines Werkstücks mit. Ein weiterer Vorteil besteht darin, daß eine genau bemessene Schmierstoffmenge für einen oder vorzugsweise für eine Vielzahl von Bohrvorgängen zur Verfügung gestellt werden kann. So ist es beispielsweise denkbar, in einen im Bohrwerkzeugschaft integrierten Spendebehälter eine für die gesamte Standzeit des Bohrwerkzeugs ausreichende Schmierstoffmenge einzufüllen. Ein solches Bohrwerkzeug kann unabhängig von einer an einer Bearbeitungsmaschine vorhandenen Schmierstoffversorgeeinrichtung stets mit einer ausreichenden Schmierstoffmenge im Sinne einer Mindermengenschmierung versorgt werden.

Für den Antrieb des Schmierstoffstromes während eines Bohr- bzw. Zerspanungsvorganges stehen bei einem erfindungsgemäßen Bohrwerkzeug mehrere Möglichkeiten zur Verfügung. Die treibende Kraft für den Schmierstoffstrom kann in vorteilhafter Weise dadurch erzeugt werden, daß der Spendebehälter oberhalb der Wirkstellen des Bohrwerkzeuges angeordnet ist. Dieser Fall tritt dann auf, wenn eine Bohrung im wesentlichen von oben nach unten erfolgt. Im Falle von seitlich am Bohrwerkzeug angeordneten Austrittsöffnungen wirkt auch die durch die Eigendrehung des Bohrwerkzeugs hervorgerufene Fliehkraft auf den Schmierstoff. Die durch den hydrostatischen Druck des oberhalb der Wirkstelle angeordneten Spendebehälters bedingte Schmierstofförderung wird daher in der Regel durch Fliehkräfte unterstützt. Um ein Auslaufen des Schmierstoffes bei nicht benutztem Bohrwerkzeug zu verhindern, ist es vorteilhaft, einen bei Raumtemperatur festen oder hochviskosen Schmierstoff zu verwenden, der sich bei den beim Zerspanen herrschenden Temperaturen verflüssigt. Der bei Raumtemperatur feste bzw. hochviskose Schmierstoff wird durch Adhäsions- und Kohäsionskräfte im Schmierstoffkanal zurückgehalten. Im Einsatz wird das Bohrwerkzeug bereits nach kurzer Betriebsdauer derart erwärmt, daß der Schmierstoff in einen flüssigen bzw. weniger viskosen Zustand übergeht. Auf ihn wirken dann die Schwerkraft und im Bereich der Austrittsöffnungen Fliehkräfte ein, so daß er zu den Wirkstellen des Bohrwerkzeuges gefördert wird. Der Schmierstoff kann aber auch bei Raumtemperatur flüssig sein. Ein Austreten aus den Austrittsöffnungen kann dadurch verhindert werden, daß die Querschnittsfläche der Austrittsöffnung und die Viskosität des Schmierstoffs so aufeinander abgestimmt sind, daß die Adhäsions- und Kohäsionskräfte größer sind als die durch den hydrostatischen Druck hervorgerufenen Kräfte.

Der Transport des Schmierstoffs zu den Wirkstellen des Bohrwerkzeugs kann vorteilhaft auch durch eine kapillare Flüssigkeitsfördervorrichtung unterstützt werden. Darunter sind schwammartige oder faserförmige Speichermedien zu verstehen, mit denen zumindest der oder die Schmierstoffkanäle gefüllt sind. Es kann auch vorteilhaft sein, wenn auch der Spendebehälter mit einem solchen Speichermedium gefüllt ist. Der Schmierstoff tritt bei dieser Verfahrensweise fliehkraftbedingt und gegebenenfalls unterstützt durch eine temperaturbedingte Viskositätsverringerung aus den Austrittsöffnungen aus. Der im Wirkbereich des Bohrwerkzeugs verbrauchte Schmierstoff wird über das Speichermedium im Schmierstoffkanal aus dem Spendebehälter aufgrund von Kapillarkräften nachgesaugt. Der Vorteil einer solchen Verfahrensweise liegt auch darin, daß eine Kühlschmierung praktisch unabhängig von der jeweiligen Lage des Bohrwerkzeugs erfolgen kann.

Eine lageunabhängige Schmierung ist auch dann möglich, wenn im Spendebehälter ein Druck vorhanden ist oder erzeugt wird. Auf diese Weise können auch höher viskose und solche Schmierstoffe eingesetzt werden, die sich bei den beim Einsatz herschenden Temperaturen nicht ausreichend verflüssigen und ohne Druckanwendung nicht zu den Wirkstellen gelangen würden. Die Schmierstoffmenge bzw. der Schmierstoffstrom kann ganz allgemein ohne größeren technischen Aufwand durch die Größe der Austrittsöffnungen gesteuert werden. Bezogen auf eine bestimmte Bohrwerkzeugdrehzahl läßt sich auf diese Weise ein relativ genauer Schmierstoffstrom festlegen.

Die Erfindung wird nun exemplarisch anhand von in den beigefügten Zeichnungen dargestellten Ausführungsbeispielen eines Bohrers näher erläutert. Es zeigen:
- Fig. 1: eine Seitenansicht eines im Schaftbereich längsgeschnittenen Bohrers, bei dem der Spendebehälter durch eine Ausnehmung im Bohrerschaft gebildet ist,
- Fig. 2: einen Bohrer gemäß Fig. 1, jedoch mit einem koaxial positionierten, sich in Richtung zur Bohrerspitze verjüngenden Schmierstoffkanal,
- Fig. 3: einen Bohrer in einer Darstellung gemäß Fig. 1, mit einem zentralen, koaxial positionierten Schmierstoffkanal in Form einer Stufenbohrung,
- Fig. 4: einen Bohrer mit einem als Wechselpatrone ausgeführten Spendebehälter,
- Fig. 5: einen Bohrer, bei dem der Spendebehälter und ein zentraler Schmierstoffkanal mit einem pörösen bzw. kapillaren Speichermedium gefüllt sind, und
- Fig. 6: einen Bohrer, an dessen schaftseitige Stirnseite ein separater Aufsetzbehälter als Spendebehälter angedockt ist.

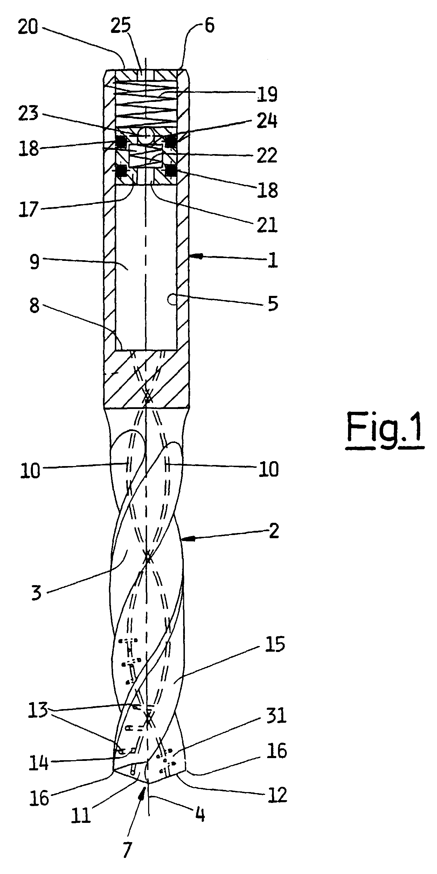

Fig. 1 zeigt einen erfindungsgemäßen Bohrer, der in einen Schaft 1 und ein Schneidteil 2 untergliedert ist. Das Schneidteil weist zwei Spannuten 3 auf, die sich wendelförmig um die Mittellängsachse 4 des Bohrers erstrecken. Im Schaft 1 des Bohrers ist eine Ausnehmung 5 vorhanden, die koaxial um die Mittellängsachse 4 positioniert ist und die sich nach Art eines Sackloches von der schaftseitigen Stirnseite 6 des Bohrers in Richtung Bohrerspitze 7 erstreckt. Die Ausnehmung 5 dient als Spendebehälter 9 zur Aufnahme eines Schmierstoffes. In den Boden 8 des Spendebehälters münden zwei Schmierstoffkanäle 10, die sich dem Spannutverlauf entsprechend wendelförmig durch das Schneidteil 2 hindurch bis zur Bohrerspitze 7 erstrecken. Dort münden die Schmierstoffkanäle 10 in die Freiflächen 11 der Bohrerhauptschneiden. Vorzugsweise sind die in den Freiflächen vorhandenen Austrittsöffnungen der Schmierstoffkanäle mit einem Lotmaterial o.dgl. verstopft. Im spitzennahen Bereich des Schneidteils sind mehrere Stichkanäle 14 vorhanden, die sich vom Bohrerrücken 15 zu dem dem Bohrerrücken zugeordneten Schmierstoffkanal 10 erstrecken. Durch diese sich vom Schmierstoffkanal etwa radial wegerstreckende Stichkanäle tritt der Schmierstoff beim Zerspanungsvorgang über Austrittsöffnungen 13 nach außen und gelangt an die jeweilige Wirkstelle, im vorliegenden Fall an den Bohrerrücken 15 und an die Spanfläche 31 im Bereich der Schneidecke 16 des Bohrers und an sich daran schaftwärts anschließende Bereiche. Der sich in den Stichkanälen befindliche Schmierstoff wird fliehkraftbedingt nach außen gefördert. Durch eine entsprechende Wahl der Querschnittsfläche der Stichkanäle kann die Schmierstoffmenge gesteuert werden. Zweckmäßig ist es, wenn der Durchmesser der Schmierstoffkanäle mit zunehmenden Abstand von der Bohrerspitze 7 abnimmt. Damit ist gewährleistet, daß die größere Schmierstoffmenge an den eigentlichen Wirkort, nämlich in die Nähe der Hauptschneiden 12 gelangt.

Der Spendebehälter ist druckbeaufschlagt. Dazu ist in ihm ein Druckkolben 17 in Axialrichtung beweglich eingepaßt, der über O-Ringe 18 zur Innenwand des Spendebehälters 9 abgedichtet ist. Eine Druckfeder 19 stützt sich einerseits an der schaftseitigen Stirnseite des Druckkolbens 17 und andererseits einer bündig mit der Stirnseite 6 des Bohrers abschließenden Verschlußplatte 20 ab. Durch die Wirkung der Druckfeder wird der zwischen dem Boden 8 des Spendebehälters 9 und dem Druckkolben 17 eingeschlossene Schmierstoff in die Schmierstoffkanäle 10 hineingepreßt. Die Viskosität des Schmierstoffes, die Federkraft der Druckfeder 19 sowie die Querschnittsflächen sowohl der Schmierstoffkanäle als auch der Stichkanäle 14 und der Austrittsöffnungen 13 sind so aufeinander abgestimmt, daß bei gegebener Viskosität des Schmierstoffes bei Raumtemperatur praktisch kein Schmierstoff aus den Stichkanälen hinausgepreßt wird. Erst bei Erwärmung während des Zerspanungsprozesses, wenn also die Viskosität des Schmierstoffes abnimmt, dieser also dünnflüssiger wird, wird Schmierstoff durch Stichkanäle 14 nach außen gefördert.

Der Druckkolben 17 ist von einem Befüllungskanal 21 durchsetzt, in dem ein durch eine Druckfeder 22 in Schließrichtung beaufschlagtes Kugelventil angeordnet ist. Dessen Schließelement, nämlich die Verschlußkugel 23 wird durch die Feder 22 gegen einen eine Einfüllöffnung 24 umgebenden Ventilsitz gedrückt. Der Spendebehälter ist dadurch verschlossen. Zum Nachfüllen kann über eine Einführöffnung 25 in der Verschlußplatte 20 eine Kanüle in die Einfüllöffnung 24 eingeführt und dadurch die Verschlußkugel 23 von ihrem Sitz abgehoben werden. Der Spendebehälter 9 ist auf diese Weise mit Schmierstoff nachfüllbar.

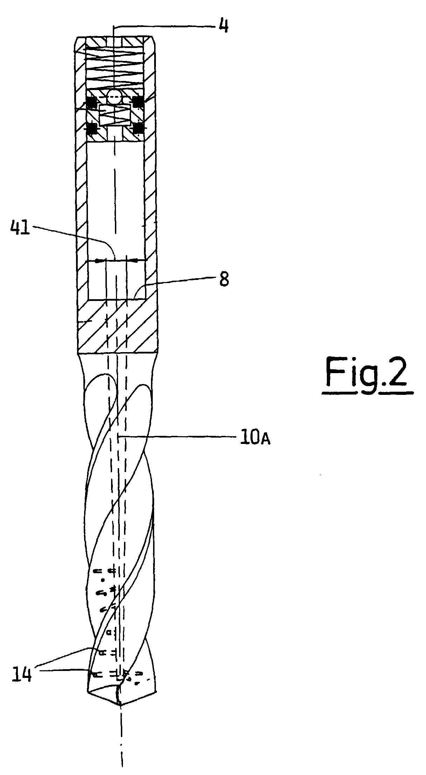

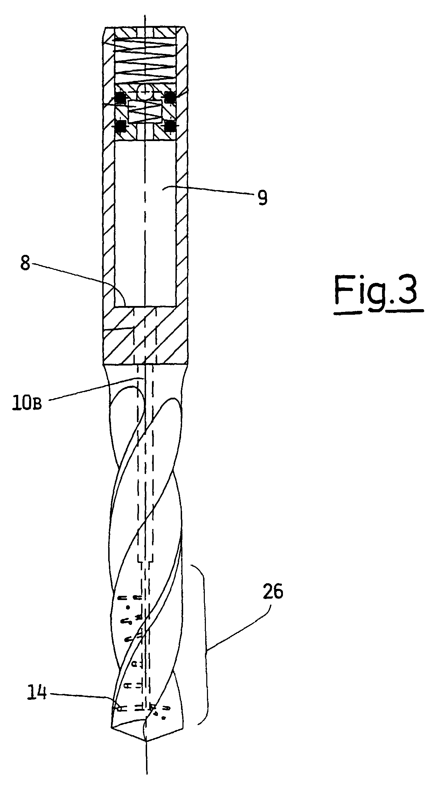

Der in Fig. 2 dargestellte Bohrer unterscheidet sich von jenem gemäß Fig. 1 im wesentlichen nur dadurch, daß statt zwei Schmierstoffkanälen ein einziger Schmierstoffkanal 10a vorhanden ist, der sich koaxial zur Mittellängsachse 4 des Bohrers erstreckt. Der Schmierstoffkanal 10a endet mit Abstand blind vor der Bohrerspitze 7 und erstreckt sich schaftwärts bis zum Spendebehälter 9. Der Durchmesser 41 des Schmierstoffkanals 10a ist im Bereich des Bodens 8 des Spendebehälters 9 am größten und nimmt zur Bohrerspitze 7 hin kontinuierlich ab. Eine ähnliche Verjüngung des Schmierstoffkanals ist auch bei dem in Fig. 3 dargestellten Bohrer vorhanden. Hier nimmt der Schmierstoffkanal 10b von dem Spendebehälter zur Spitze hin nicht kontinuierlich, sondern in Stufen ab. Der Schmierstoffkanal 10b ist somit in Form einer Stufenbohrung ausgebildet. Er weißt insgesamt drei Bereiche unterschiedlichen Durchmessers auf, wobei ein erster Bereich mit dem größten Durchmesser sich spitzenwärts an den Boden 8 des Spendebehälters 9 anschließt. Etwa an der Trennlinie zwischen Schaft 1 und Schneidteil 2 verengt sich der Schmierstoffkanal 10b. Dieser Bereich mittleren Durchmessers endet, etwa in der Mitte des Schneidteils und es schließt sich ein Bereich mit einem noch kleineren Durchmesser an. Von diesem Bereich 26 des Schmierstoffkanals 10b zweigen mehrere Stichkanäle 14 ab, die mit Austrittsöffnungen 13 im Bohrerrücken 15 und in der Spanfläche 31 ausmünden. Durch die in Fig. 2 und 3 dargestellte Form des Schmierstoffkanals wird das Nachfließen eines zähflüssigen Schmierstoffes erleichtert.

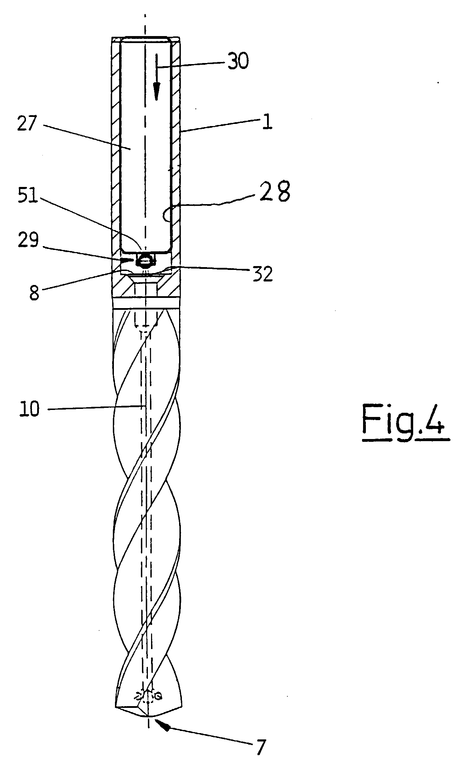

Einen Bohrer mit einem auswechselbaren Spendebehälter zeigt die Fig. 4. Der Spendebehälter ist hier in Form einer Wechselpatrone 27 ausgestaltet, die in einer komplementär geformten Aufnahme-Ausnehmung 28 im Schaft 1 einliegt. An der im Montagezustand der Bohrerspitze 7 zugewandten Stirnseite der Wechselpatrone 27 ist ein Kugel-Sperrventil 29 angeordnet. In der in Fig. 4 dargestellten Situation ist die Wechselpatrone noch nicht gebrauchsbereit in die Aufnahmeausnehmung 28 eingesetzt. Wird ausgehend von der in Fig. 4 gezeigten Stellung die Wechselpatrone 27 in Richtung des Pfeiles 30 bewegt so stößt die Schließkugel 51 des Kugel-Sperrventils 29 auf einen am Boden 8 der Aufnahmeausnehmung 28 angeordneten Betätigungstößel 32 und wird dadurch, ähnlich wie bei einem Füllfederhalter, in ihre Öffnungsstellung bewegt. Der Schmierstoff kann dann in die Aufnahme-Ausnehmung 28 bzw. in den Schmierstoffkanal 10 gelangen.

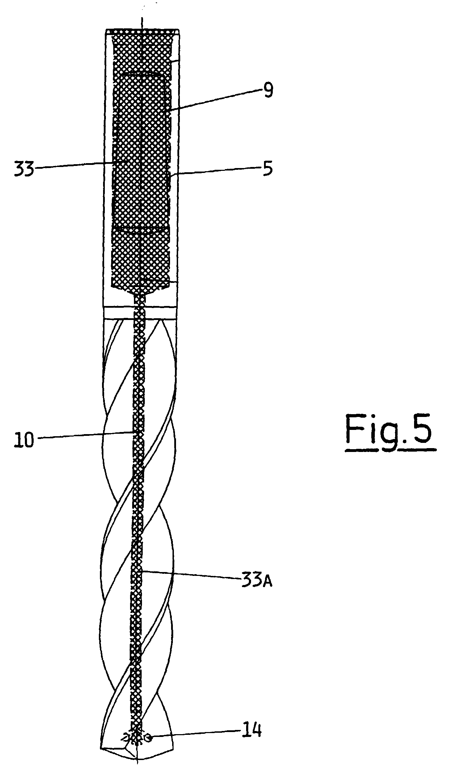

Bei dem Ausführungsbeispiel gemäß Fig. 5 ist ein zentraler Schmierstoffkanal 10 vorhanden, der in einen Spendebehälter 9 mündet, der wie bei dem Bohrer gemäß Fig. 1, von einer Ausnehmung 5 gebildet ist. Der Spendebehälter 9 sowie der Schmierstoffkanal 10 sind mit einem porösen bzw. kapillaren Speichermedium 33,33a gefüllt. Es kann sich dabei etwa um ein Sintermaterial mit schwammartig untereinander verbundenen Hohlräumen oder etwa um ein faserartiges Material handeln. In den kapillaren Hohlräumen des Speichermediums 33 ist ein relativ dünnflüssiger Schmierstoff enthalten. Beim Betrieb des in Fig. 5 dargestellten Bohrers wird der Schmierstoff gegebenenfalls durch die betriebsbedingte Erwärmung verflüssigt, tritt über die Stichkanäle 14 fliehkraftbedingt nach außen und gelangt an die Wirkstellen, etwa an die Spanfläche 31. Aufgrund der kapillaren Saugwirkung des Speichermediums 33 wird der an die Wirkstellen abgegebene Schmierstoff kontinuierlich ersetzt. Der Vorteil dieser Ausführungsform besteht nicht zuletzt in ihrer technischen Einfachheit. Es ist weder ein Gaspolster noch sonst ein Druckmedium notwendig, um den Schmierstoff vom Spendebehälter 9 zu den Wirkstellen zu fördern. Dies geschieht allein durch die Kapillarwirkung des Speichermediums, etwa ähnlich wie bei einem Filzschreiber. Der Bohrer gemäß Fig. 5 kann auch in beliebigen Lagen eingesetzt werden, ohne daß dadurch seine Funktionsfähigkeit bzw. die Schmierstoffzufuhr beeinträchtigt würde. Es ist auch denkbar, daß im Spendebehälter selbst kein Speichermedium vorhanden ist und sich das Speichermedium des Schmierstoffkanals nach Art eines Saugrohres durch den Innenraum des Spendebehälters hindurch erstreckt.

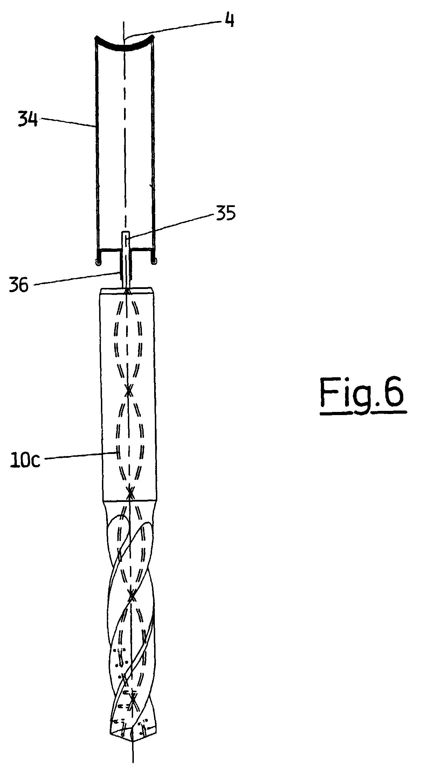

Bei dem Bohrer gemäß Fig. 6 ist der Schmierstoffvorrat nicht innerhalb des Bohrerschaftes sondern in einem separaten Aufsetzbehälter 34 angeordnet, der mit der schaftseitigen Stirnseite 6 des Bohrers verbunden ist. Die genannte Stirnseite weist zu diesem Zweck einen sich in Richtung der Mittellängsachse 4 erstreckenden Anschlußstutzen 35 auf, der von einem Verbindungskanal (nicht dargestellt) durchzogen ist. Die beiden gedrallten Schmierstoffkanäle 10c münden in den Verbindungskanal. Der Aufsetzbehälter 34 weist auf seiner im Montagezustand dem Bohrer zugewandten Stirnseite eine von einem Hals 36 umgebene Öffnung auf. Im Montagezustand liegt der Anschlußstutzen 35 in dem Hals 36 ein, wodurch eine mechanische Befestigung des Aufsetzbehälters am Bohrer bzw. am Anschlußstutzen 35 bewerkstelligt wird.

### Bezugszeichenliste

- 1: Schaft
- 2: Schneidteil
- 3: Spannut
- 4: Mittellängsachse
- 5: Ausnehmung
- 6: Stirnseite
- 7: Bohrerspitze
- 8: Boden
- 9: Spendebehälter
- 10: Schmierstoffkanal
- 11: Freifläche
- 12: Hauptschneide
- 13: Austrittsöffnung
- 14: Stichkanal
- 15: Bohrerrücken
- 16: Schneidecke
- 17: Druckkolben
- 18: O-Ring
- 19: Druckfeder
- 20: Verschlußplatte
- 21: Befüllungskanal
- 22: Druckfeder
- 23: Verschlußkugel
- 24: Einfüllöffnung
- 25: Einführöffnung
- 26: Bereich
- 27: Wechselpatrone
- 28: Aufnahme-Ausnehmung
- 29: Kugel-Sperrventil
- 30: Pfeil
- 31: Spanfläche
- 32: Betätigungsstößel
- 33: Speichermedium
- 34: Aufsetzbehälter
- 35: Anschlußstutzen
- 36: Hals
- 41: Durchmesser Fig.2
- 51: Schließkugel Fig. 4

## Patentansprüche

1. Bohrwerkzeug, insbesondere Bohrer, mit einem Schaft (1), einem Schneidteil (2) und wenigstens einem internen, mit wenigstens einer Austrittsöffnung (13) in einem Wirkbereich des Bohrers nach außen mündenden Schmierstoffkanal (10), and mit wenigstens einem als Spendebehälter (9) für einen Schmierstoff dienenden Vorratsbehälter, der fluidisch mit dem wenigstens einen Schmierstoffkanal (10) verbunden ist,
dadurch gekennzeichnet,
daß der Vorratsbehälter innerhalb des Bohrerschaftes (1) angeordnet ist.

2. Bohrwerkzeug nach Anspruch 1,
dadurch gekennzeichnet,
daß der Spendebehälter (9) von einer sich von der schaftseitigen Stirnfläche (6) des Bohrwerkzeugs in Richtung Schneidteil (2) erstreckenden sacklochförmigen Ausnehmung (5) im Schaft (1) des Bohrwerkzeugs gebildet ist.

3. Bohrwerkzeug nach Anspruch 1,
dadurch gekennzeichnet,
daß der Spendebehälter (9) eine Wechselpatrone (27) ist, die in einer Aufnahmeausnehmung (28) im Schaft (1) des Bohrwerkzeugs einliegt.

4. Bohrwerkzeug nach Anspruch 3,
dadurch gekennzeichnet,
daß die Wechselpatrone (27) ein stirnseitig angeordnetes Kugel-Sperrventil (29) mit einer in Schließrichtung federbeaufschlagten Schließkugel aufweist, die bei in der Aufnahmeausnehmung (28) einliegender Wechselpatrone (27) durch einen am Boden (8) der Aufnahmeausnehmung (28) angeordneten Betätigungsstößel (32) in ihrer Öffnungsstellung gehalten ist.

5. Bohrwerkzeug, insbesondere Bohrer, mit einem Schaft (1), einem Schneidteil (2) und wenigstens einem internen, mit wenigstens einer Austrittsöffnung (13) in einem Wirkbereich des Bohrers nach außen mündenden Schmierstoffkanal (10), und mit wenigstens einem als Spendebehälter (9) für einen Schmierstoff dienenden Vorratsbehälter, der fluidisch mit dem wenigstens einen Schmierstoffkanal (10) verbunden ist,
dadurch gekennzeichnet,
daß der Spenderbehälter (9) ein separater, mit der schaftseitigen Stirnseite (6) des Bohrwerkzeugs lösbar verbundener Aufsetzbehälter (34) ist, dessen Durchmesser im wesentlichen nicht größer ist als der Durchmesser des Schaftes (1).

6. Bohrwerkzeug nach Anspruch 5,
gekennzeichnet durch
einen in eine Öffnung des Aufsetzbehälters (34) einschiebbaren, von einem mit einem Schmierstoffkanal (10) fluidisch verbundenen Verbindungskanal durchsetzten Anschlußstutzen (35).

7. Bohrwerkzeug nach einem der Ansprüche 1 bis 6,
dadurch gekennzeichnet,
daß der Spendebehälter (9) druckbeaufschlagt ist.

8. Bohrwerkzeug nach Anspruch 7,
dadurch gekennzeichnet,
daß im Spendebehälter (9) ein expandierbares Gaspolster vorhanden oder erzeugbar ist.

9. Bohrwerkzeug nach Anspruch 7,
gekennzeichnet durch
eine Druckbeaufschlagung in Form eines im Spendebehälter (9) angeordneten federbelasteten Druckkolbens (17).

10. Bohrwerkzeug nach einem der Ansprüche 1 bis 9,
dadurch gekennzeichnet,
daß im Spendebehälter (9) ein kapillares Speichermedium (33) angeordnet ist, das mit einem kapillaren Speichermedium (33a) in einem Schmierstoffkanal (10a) zusammenwirkt.

11. Bohrwerkzeug nach einem der Ansprüche 1 bis 10,
gekennzeichnet durch
einen wiederbefüllbaren Spendebehälter (9).

12. Bohrwerkzeug nach einem der Ansprüche 9 und 11,
gekennzeichnet durch
einen sich durch den Druckkolben (17) hindurcherstreckenden Befüllungskanal (21) mit einem darin angeordneten, von außen entriegelbaren Rückschlagventil.

13. Bohrwerkzeug nach einem der Ansprüche 1 bis 12,
gekennzeichnet durch
wenigstens einen Schmierstoffkanal (10), von dem wenigstens ein Stichkanal (14) kleineren Durchmessers abzweigt, der mit einer Austrittsöffnung (13) an einer Wirkstelle des Bohrwerkzeugs ausmündet, wobei der Stichkanal und/oder die Austrittsöffnung (13) einen kleineren Strömungsquerschnitt aufweisen als der Schmierstoffkanal.

14. Bohrwerkzeug nach Anspruch 13,
gekennzeichnet durch
einen zentralen, koaxial zur Mittellängsachse (4) des Bohrwerkzeugs verlaufenden Schmierstoffkanal (10a), der sich zumindest im Bereich von Austrittsöffnungen (13) zur Spitze des Bohrwerkzeugs hin verjüngt.

15. Bohrwerkzeug nach Anspruch 13,
gekennzeichnet durch
einen zentralen, koaxial zur Mittellängsachse (4) des Bohrwerkzeugs verlaufenden, nach Art einer schaftseitig eingebrachten Stufenbohrung ausgebildeten Schmierstoffkanal (10b), wobei die Stichkanäle (14) von einem der Bohrerspitze (7) des Bohrwerkzeugs nahen Bereich (26) mit verengtem Durchmesser abzweigen.

16. Bohrwerkzeug nach Anspruch 13,
gekennzeichnet durch
zwei gedrallte Schmierstoffkanäle (10c) mit einem dem Verlauf von im Schneidteil (2) vorhandenen Spannuten (3) entsprechenden Verlauf.

## Claims

1. Boring tool, in particular a drill, having a shank (1), a cutting part (2) and at least one internal lubricant duct (10) which has at least one outlet opening (13) and opens out in a working area of the drill, and having at least one reservoir which serves as a dispenser (9) for a lubricant and is in fluid communication with the at least one lubricant duct (10), characterized in that the reservoir is arranged inside the drill shank (1).

2. Boring tool according to Claim 1, characterized in that the dispenser (9) is formed by a recess (5), which is in the form of a blind hole and extends from the shank-side end face (6) of the boring tool towards the cutting part (2), in the shank (2) of the boring tool.

3. Boring tool according to Claim 1, characterized in that the dispenser (9) is an exchangeable cartridge (27) which rests in a receiving recess (28) in the shank (1) of the boring tool.

4. Boring tool according to Claim 3, characterized in that the exchangeable cartridge (27) has a shut-off ball valve (29) which is arranged on its end side and has a closure ball which is spring-loaded in the closure direction and, when the exchangeable cartridge (27) is resting in the receiving recess (28), is held in its open position by an actuating ram (32) which is arranged on the bottom (8) of the receiving recess (28).

5. Boring tool, in particular a drill, having a shank (1), a cutting part (2) and at least one internal lubricant duct (10) which has at least one outlet opening (13) and opens out in a working area of the drill, and having at least one reservoir which serves as a dispenser (9) for a lubricant and is in fluid communication with the at least one lubricant duct (10), characterized in that the dispenser (9) is a separate add-on container (34) which is releasably connected to the shank-side end (6) of the boring tool and the diameter of which is essentially no greater than the diameter of the shank (1).

6. Boring tool according to Claim 5, characterized by a connection stub (35) which can be pushed into an opening in the add-on container (34) and which has a connecting duct, which is in fluid communication with a lubricant duct (10), running through it.

7. Boring tool according to one of Claims 1 to 6, characterized in that pressure is applied to the dispenser (9).

8. Boring tool according to Claim 7, characterized in that an expandable gas cushion is present or can be generated in the dispenser (9).

9. Boring tool according to Claim 7, characterized by pressure being applied in the form of a spring-loaded pressure piston (17) arranged in the dispenser (9).

10. Boring tool according to one of Claims 1 to 9, characterized in that a capillary storage medium (33), which interacts with a capillary storage medium (33a) in a lubricant duct (10a), is arranged in the dispenser (9).

11. Boring tool according to one of Claims 1 to 10, characterized by a dispenser (9) which can be refilled.

12. Boring tool according to one of Claims 9 and 11, characterized by a filling duct (21) which extends through the pressure piston (17) and has a non-return valve, which can be released from the outside, arranged therein.

13. Boring tool according to one of Claims 1 to 12, characterized by at least one lubricant duct (10), from which at least one branch duct (14) of smaller diameter branches off, which branch duct, by means of an outlet opening (13), opens out at a working area of the boring tool, the branch duct and/or the outlet opening (13) having a smaller cross section of flow than the lubricant duct.

14. Boring tool according to Claim 13, characterized by a central lubricant duct (10a) which runs coaxially with respect to the centre longitudinal axis (4) of the boring tool and tapers towards the point of the boring tool at least in the area of outlet openings (13).

15. Boring tool according to Claim 13, characterized by a central lubricant duct (10b) which runs coaxially with respect to the centre longitudinal axis (4) of the boring tool and is designed in the manner of a stepped bore arranged on the shank side, the branch ducts (14) branching off from an area (26) which is close to the point (7) of the boring tool and has a constricted diameter.

16. Boring tool according to claim 13, characterized by two twisted lubricant ducts (10c), the path of which matches the path of flutes (3) which are present in the cutting part (2).

## Revendications

1. Outil de perçage, en particulier foret, comportant une tige (1), une partie de coupe (2) et au moins un canal à lubrifiant interne (10) débouchant vers l'extérieur par au moins une ouverture de sortie (13) dans une zone d'action du foret, et au moins un récipient de réserve servant de récipient distributeur (9) pour un lubrifiant qui est en communication de fluide avec ledit au moins un canal à lubrifiant (10), caractérisé en ce que le récipient de réserve est agencé à l'intérieur de la tige (1) du foret.

2. Outil de perçage selon la revendication 1, caractérisé en ce que le récipient distributeur (9) est formé par un évidement (5) dans la tige (1) de l'outil de perçage, en forme de trou borgne qui s'étend depuis la surface frontale (6) côté tige de l'outil de perçage en direction de la partie de coupe (2).

3. Outil de perçage selon la revendication 1, caractérisé en ce que le récipient distributeur (9) est une cartouche interchangeable (27) qui repose dans un évidement de réception (28) dans la tige (1) de l'outil de perçage.

4. Outil de perçage selon la revendication 3, caractérisé en ce que la cartouche interchangeable (27) comporte une valve d'obturation à bille (29) agencée du côté frontal, qui présente une bille de fermeture sollicitée par un ressort en direction de fermeture qui, lorsque la cartouche interchangeable (27) repose dans l'évidement de réception (28), est maintenue dans sa position d'ouverture par un poussoir d'actionnement (32) agencé au fond de l'évidement de réception (28).

5. Outil de perçage, en particulier foret, comportant une tige (1), une partie de coupe (2) et au moins un canal à lubrifiant interne (10) débouchant vers l'extérieur par au moins une ouverture de sortie (13) dans une zone d'action du foret, et au moins un récipient de réserve servant de récipient distributeur (9) pour un lubrifiant qui est en communication de fluide avec ledit au moins un canal à lubrifiant (10), caractérisé en ce que le récipient distributeur (9) est un récipient démontable séparé (34) qui est relié de façon détachable à la face frontale (6) côté tige de l'outil de perçage et dont le diamètre n'est sensiblement pas supérieur au diamètre de la tige (1).

6. Outil de perçage selon la revendication 5, caractérisé par un manchon de raccordement (35) susceptible d'être introduit dans une ouverture du récipient démontable (34) et traversé par un canal de liaison qui est en communication de fluide avec un canal à lubrifiant (10).

7. Outil de perçage selon l'une quelconque des revendications 1 à 6, caractérisé en ce que le récipient distributeur (9) est sous pression.

8. Outil de perçage selon la revendication 7, caractérisé en ce qu'un coussin de gaz expansible est présent ou susceptible d'être produit dans le récipient distributeur (9).

9. Outil de perçage selon la revendication 7, caractérisé par des moyens de compression sous forme d'un piston de compression (17) chargé par un ressort et agencé dans le récipient distributeur (9).

10. Outil de perçage selon l'une quelconque des revendications 1 à 9, caractérisé en ce qu'un moyen d'accumulation capillaire (33) est agencé dans le récipient distributeur (9), qui coopère avec un moyen d'accumulation capillaire (33a) dans un canal à lubrifiant (10a).

11. Outil de perçage selon l'une quelconque des revendications 1 à 10, caractérisé par un récipient distributeur (9) susceptible d'être re-rempli.

12. Outil de perçage selon l'une quelconque des revendications 9 et 11, caractérisé par un canal de remplissage (21) qui s'étend à travers le piston de compression (17) et qui comprend un clapet anti-retour agencé dans celui-ci et susceptible d'être déverrouillé depuis l'extérieur.

13. Outil de perçage selon l'une quelconque des revendications 1 à 12, caractérisé par au moins un canal à lubrifiant (10) depuis lequel se ramifie au moins un canal de dérivation (14) de diamètre plus petit qui débouche par une ouverture de sortie (13) à un emplacement d'action de l'outil de perçage, le canal de dérivation et/ou l'ouverture de sortie (13) présentant une section d'écoulement plus petite que le canal à lubrifiant.

14. Outil de perçage selon la revendication 13, caractérise par un canal à lubrifiant central (10a) qui s'étend coaxialement à l'axe longitudinal médian (4) de l'outil de perçage et qui va en se rétrécissant vers la pointe de l'outil de perçage du moins dans la zone d'ouvertures de sortie (13).

15. Outil de perçage selon la revendication 13, caractérisé par un canal à lubrifiant central (10a) qui s'étend coaxialement à l'axe longitudinal médian (4) de l'outil de perçage et qui est réalisé à la manière d'un perçage en gradins ménagé du côté tige, les canaux de dérivation (14) se ramifiant avec un diamètre rétréci depuis une zone (26) proche de la pointe (7) de l'outil de perçage.

16. Outil de perçage selon la revendication 13, caractérisé par deux canaux à lubrifiants torsadés (10c) dont le tracé correspond au tracé de goujures (3) prévues dans la partie de coupe (2).
